# EUROPÄISCHE PATENTSCHRIFT

(11) **EP 1 574 725 B1**
(45) Veröffentlichungstag und Bekanntmachung des Hinweises auf die Patenterteilung: **29.11.2006**
(21) Anmeldenummer: 04005769.7
(22) Anmeldetag: 11.03.2004
(51) Int. Cl.: F16B 7/18, F16B 23/00, F16B 37/12

(54) **Profilverbindung**
Connection of profiles
Liaison pour profilés

(43) Veröffentlichungstag der Anmeldung: 14.09.2005
(73) Patentinhaber: Band, Richard, D-91183 Abenberg (DE); Band, Franz, 90559 Burgthann (DE)
(72) Erfinder: Band, Richard, D-91183 Abenberg (DE); Band, Franz, 90559 Burgthann (DE)
(74) Vertreter: Zech, Stefan Markus

(56) Entgegenhaltungen:
- EP-A- 0 458 069
- DE-A- 3 934 621
- DE-A- 10 200 964
- DE-C- 19 745 685
- US-A- 3 190 169

## Beschreibung

Die Erfindung betrifft eine Profilverbindung umfassend zwei zu verbindende Profilstäbe aus Metall, insbesondere aus Aluminium, die jeweils mindestens eine längsverlaufende hinterschnittene Profilnut aufweisen, wobei in die mindestens eine Profilnut des ersten Profilstabes eine Verbindungsschraube mit einem Schraubenkopf und einem Schraubenschaft einführbar ist und wobei in die Profilnut weiterhin eine Gewindehülse mit einer parallel zur Profilnut verlaufenden Durchtrittsbohrung einschraubbar ist, wobei die Verbindungsschraube mit ihrem Schraubenschaft die Gewindehülse durchtritt und durch die Gewindehülse in Verbindungsrichtung gehalten wird, wobei in die mindestens eine zugeordnete Profilnut des zweiten Profilstabes ein als für die Verbindungsschraube als Gewindemutter wirkendes Gegenlagerstück mit einer auf das Gewinde des Schraubenschaftes angepassten Innengewindebohrung eingebracht ist, gemäß dem Oberbegriff von Patentanspruch 1.

Eine derartige Profilverbindung ist bereits aus der europäischen Patentschrift EP 0 458 069 B1 bekannt. Dort ist die Gewindehülse mit einem selbstschneidenden Gewinde versehen, das ein Gewinde in die Profilnut des Profilstabes durch Gewindeschneiden einformt. Eine Ausbildung eines solchen Gewindes durch ein Gewindeschneidwerkzeug ist bereits in der DE 102 00 964 A1 beschrieben.

Beide Vorgehensweisen sind jedoch nachteilig, da beim Gewindeschneiden ein Spanabhub entsteht, der nachfolgend unter kosten- und zeitaufwendigen Reinigungsprozeduren wieder beseitigt werden muss.

Die Aufgabe der vorliegenden Erfindung besteht demgegenüber darin, eine Profilverbindung zu schaffen, bei der die Gewindehülse auf alternative Weise in die Profilnut des Profilstabes einschraubbar ist.

Diese Aufgabe wird in überraschender Weise gelöst nach dem Merkmal von Patentanspruch 1. Vorteilhafte Weiterbildungen sind in den Unteransprüchen angegeben.

Ein Kerngedanke der vorliegenden Erfindung besteht darin, das Gewinde durch Gewindedrücken herzustellen und zwar dadurch, dass das Gewinde direkt durch die einzubringende Gewindehülse gedrückt wird. Hierzu umfasst die Gewindehülse an ihrer Außenseite einen Gewindedrückabschnitt, der zum Spanabhub vermeidenden Formen eines Gewindes mit durch Umformung geschaffenen und oberflächennah verfestigten Gewindeflanken in der Profilnut des Profilstabes ausgebildet ist.

Die Ausbildung eines Gewindes in der Profilnut durch Gewindedrücken hat gegenüber dem aus dem Stand der Technik bekannten Gewindeschneiden zahlreiche Vorteile. Zunächst entsteht beim Gewindedrücken kein Spanabhub, so dass aufwendige Reinigungsprozeduren nach Einsetzen der Gewindehülse in die Profilnut nicht mehr notwendig sind. Beim Gewindeschneiden besteht anders als beim erfindungsgemäßen Gewindedrücken zudem das Risiko, dass beim Eindrehen mehrere Gewindegänge in der Profilnut nicht exakt eingeschnitten, sondern abgefräst werden bis die Gewindehülse in verbleibenden Gewindegängen Halt erfährt. Gerade wenn die Gewindehülse mittels einer Bohrmaschine eingedreht wird, ist dies kritisch. Eine mittels Gewindeschneiden eingebrachte Gewindehülse kann darüber hinaus auch krumm eingedreht werden, was ebenso kritisch ist, so dass die Gewindehülse bis zu 50 % ihrer Belastbarkeit in der Profilnut einbüßen kann. Im Gegensatz hierzu lassen sich mit der erfindungsgemäßen Gewindehülse, die das Gewinde durch Gewindedrücken formt, sehr hohe und vor allem reproduzierbare Haltekräfte erzeugen. Auch wenn die Gewindehülse von Laien und/oder in unsachgemäßer Handhabung eingedreht wird, wird stets eine reproduzierbare Festigkeit erreicht.

Generell ist das durch Gewindedrücken geformte Gewinde innerhalb der Profilnut wesentlich höher belastbar als das nach dem Stand der Technik geschnittene Gewinde, da das vorbekannte Gewindeschneiden Material abträgt und Fließlinien des Metalls durchbricht, so dass die Grundfestigkeit des Materials beeinträchtigt wird. Beim Gewindedrücken dagegen wird das Material durch den Verformungsprozess verfestigt und zwar vor allem in dem für das Gewinde entscheidenden oberflächennahen Bereich. Die durch die Umformung geschaffenen Gewindeflanken weisen damit eine besonders hohe Härte auf, was die Haltekräfte entscheidend verbessert.

In einer vorteilhaften Ausgestaltung der Erfindung weist die Gewindehülse an ihrem in Einschraubrichtung vorderen Ende eine Rückdrehsperre auf, die nach Ausbildung des durch Umformen in der Profilnut erzeugten Gewindes die Gewindehülse durch die nach innen geformten Gewindestege des eingeformten Gewindes gegen Herausdrehen sichert. In dieser Ausgestaltung wird die durch die Umformung bewirkte Querschnittsreduzierung in der Profilnut ausgenutzt, wobei die Rückdrehsperre in ihrer einfachsten Ausgestaltung aus einem zylindrischen Abschnitt am vorderen Ende der Gewindehülse bestehen kann, der auf den Querschnitt der unbearbeiteten Profilnut ausgelegt ist. Somit lässt sich die Rückdrehsperre in die noch unbearbeitete Profilnut einführen, wobei die sich im Anschluss ausbildenden Gewindegänge ein Rückdrehen der Gewindehülse verunmöglichen. Anstelle einer zylindrischen Grundform kommt auch eine anderweitige Formgestaltung in Frage, die gegenüber der zentralen durch das Gewinde definierten Achse eine solche radiale Ausdehnung aufweist, dass sie im unbearbeiteten Zustand der Profilnut in diese einführbar ist und nach Ausbildung des Gewindes in der Profilnut gegen Gewindestege des ausgebildeten Gewindes in Anlage kommt und eine Rückdrehung der Gewindehülse blockiert.

Der Gewindedrückabschnitt kann linksdrehend oder rechtsdrehend, d.h. zur Ausbildung eines linksdrehenden oder rechtsdrehenden Gewindes in der Profilnut ausgebildet sein. Durch den Gewindedrückprozess wird es - anders als im Stand der Technik - nun möglich, auch ein rechtsdrehendes Gewinde in der Profilnut durch die Gewindehülse in einem Gewindedrückprozess einzuformen und für die erfindungsgemäße Profilverbindung zu nutzen. Die Gewindestege der Gewindehülse werden durch das durch Umformen gebildete Gewinde in der Profilnut federnd umschlossen, sodass eine sehr hohe Klemmkraft entsteht und auch unter Zugbelastung der Verbindungsschraube eine Lockerung der Gewindehülse oder gar ein Herausdrehen nicht zu befürchten steht. In der fakultativen Ausgestaltung, in der zusätzlich eine Rückdrehsperre vorgesehen ist, wird die Gewindehülse sogar durch eine Kombination von Rückdrehsperre einerseits und hoher Klemmkraft, die durch die federnde Umschließung des in einem Umformprozess entstandenen Gewindes hervorgerufen wird, sichergestellt.

In einer weiteren fakultativen Ausgestaltung weist die Gewindehülse an ihrem in Einschubrichtung hinteren Ende einen Werkzeugeingriff auf. Dieser ist vorzugsweise innerhalb der Durchtrittsbohrung ausgebildet.

Nach einem weiter vorteilhaften Aspekt weist die Gewindehülse an ihrem Gewindedrückabschnitt bzw. auch an einem ggf. nachfolgend angeordneten Gewinde Gewindeflanken mit einem Flankenwinkel α von weniger als 30° vorzugsweise einem Flankenwinkel α von weniger als 30°, vorzugsweise von weniger als 20°, insbesondere einem Flankenwinkel α von etwa 10 - 15° auf.

Die Ausbildung derart spitzer Gewindeflanken kann aus mehreren Aspekten heraus als vorteilhaft angesehen werden. Zum einen lässt sich die gewünschte Verformung mit weniger Kraft durchführen, zum anderen zentriert sich die Hülse besser in der Profilnut, da die auftretenden Kräfte beim Ansetzen des Gewindedrückabschnitts durch die spitzen Winkel der Gewindeflanken wesentlich reduziert werden. Weiterhin wird erreicht, dass bei der Verformung das Material nicht vor dem Gewinde hergeschoben, sondern schnell nach beiden Seiten der Gewindeflanken verdrückt wird. Dies wirkt sich optisch auf die Gestaltung der mit Gewinde versehenen Profilnut aus, die von außen sichtbar ist. Sie muss nicht mehr nachträglich kaschiert oder abgedeckt werden. Schließlich wird bei möglichst steilen Gewindeflanken unter Zugbelastung die Öffnungskraft wesentlich geringer, so dass der Halt der Gewindehülse auch unter hoher Zugbelastung noch verbessert ist.

Um diesen letztgenannten Effekt zu erreichen ist es ausreichend, wenn die in Einschubrichtung hintere Gewindeflanke gegen die Längsachse der Gewindehülse einen möglichst spitzen Winkel β von vorzugsweise weniger als 18°, weiter vorzugsweise weniger als 8°, insbesondere 0 - 5° aufweist.

Weiter zweckmäßiger Weise ist vorgesehen, dass der Gewindedrückabschnitt einen ersten Einformabschnitt aufweist, in dem die Gewindetiefe in weniger als zwei Umdrehungen, vorzugsweise in weniger als einer Umdrehung auf die zu formende Gewindetiefe ansteigt. Durch diese Maßnahme ist sichergestellt, dass die beim Umformprozess einwirkenden Kräfte sehr lokal begrenzt sind, so dass eine Aufbiegung der Profilnut vermieden wird.

In weiterhin zweckmäßig Weise wird der erste Einformabschnitt bzw. der Gewindedrückabschnitt derart gestaltet, dass die Gewindehülse selbsteinziehend ausgebildet ist. Durch diese Maßnahme kann das Eindrehen der Gewindehülse ohne nennenswerte axiale Kraft in sehr definierter Weise gewährleistet werden.

In einer konkreten, möglichen Ausgestaltung weist der Schraubenkopf der Verbindungsschraube bei einem Kopfdurchmesser von 10 mm eine Innensechskantausnehmung mit einer Schlüsselweite >5 mm, insbesondere mit einer Schlüsselweite von 6 mm (SW6) auf. Während bei einer Standardschraube bei einem Kopfdurchmesser von 10 mm eine Innensechskantausnehmung mit Schlüsselweite 5 mm vorgesehen wäre, wird es hier konkret bevorzugt, eine größere Schlüsselaufnehmung vorzusehen. Bei Schlüsselweiten von 5 mm oder darunter können nur relativ geringe Kräfte zum Festziehen der Profilverbindung übertragen werden. Als Kugelköpfe ausgebildete Innensechskantschlüssel brechen bei dieser Größe relativ schnell; somit können zum Festziehen der Profilverbindung nur herkömmlicher Innensechskant-Schlüssel verwendet werden. Diese haben jedoch den Nachteil, dass beim Endanzug der Verbindungsschrauben der Innensechskantschlüssel eine Art Federwirkung aufbaut und in der Profilnut nur ein eingeschränkter Drehkreis zum Anziehen der Verbindungsschraube zur Verfügung steht. Beim Einsatz herkömmlicher Verbindungsschrauben besteht daher das Risiko, dass der Innensechskantschlüssel an der Nutflanke blockiert wird, ein Nachsetzen des Schlüssels aber nicht mehr möglich ist, da die Schraube nicht den benötigten Endpunkt erreicht hat, um den Schlüssel noch mal nachzusetzen.

In einer weiteren, vorteilhaften Ausgestaltung weist der Schraubenschaft der Verbindungsschraube mit einem Kopfdurchmesser des Schraubenkopfes von 10 mm einen Schaftdurchmesser > 6 mm, insbesondere von 8 mm auf.

In konkreten Ausgestaltungen kann das Gegenlagerstück der Verbindungsschraube als in eine Profilnut eines zweiten Profilstabes einschiebbarer Nutenstein oder auch als eine zweite, in die Profilnut eines zweiten Profilstabes eindrehbare Gewindehülse ausgebildet sein. Der Nutenstein bzw. die zweite Gewindehülse sind jeweils mit einem auf die Verbindungsschraube angepassten Innengewinde versehen und wirken so als Gewindemutter, so dass der erste Profilstab mit dem zweiten Profilstab verbunden werden kann. Mit Hilfe der zweiten Gewindehülse kann die Profilverbindung dabei eine Stoßverbindung (180°) zwischen zwei Profilstäben ausbilden. Bei Einsatz eines Nutensteins können quer, insbesondere 90° zueinander verlaufende Profilstäbe miteinander verbunden werden.

Weiterhin wird unabhängig eine Gewindehülse, die an ihrer Außenseite einen Gewindedrückabschnitt umfasst, zur Verwendung in einer Profilverbindung nach einem der Ansprüche 1 bis 10 beansprucht.

Schließlich wird noch ein Verfahren zum Verbinden zweier Profilstäbe aus Metall, insbesondere aus Aluminium, die jeweils mindestens eine länsverlaufende hinterschnittene Profilnut aufweisen, beansprucht, wie in den Merkmalen von Patentanspruch 12 angegeben. Als erfindungswesentlicher Kernpunkt des Verfahrens wird angesehen, dass das Gewinde für die Gewindehülse innerhalb der Profilnut durch die Gewindehülse selbst mittels Gewindedrücken in einem Umformprozess eingebracht wird.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Hierbei zeigen:
- Figur 1: eine erste Ausführungsform der Profilverbindung in einer Schnittansicht durch den zweiten Profilstab
- Figur 2: eine Draufsicht auf die Profilverbindung nach Figur 1
- Figur 3: die Profilverbindung nach den Figuren 1 und 2 in einer Schnittansicht durch den ersten Profilstab
- Figur 4: eine Explosionsansicht der Komponenten Gewindehülse, Verbindungsschraube und Nutenstein für eine Profilverbindung nach den Figuren 1 bis 3
- Figur 5: eine Ausführungsform der Komponenten Gewindehülse, Verbindungsschraube und Nutenstein für eine Profilverbindung mit einer Verbindungsschraube (Einzelverbinder)
- Figur 6: die Komponenten Gewindehülsen, Verbindungsschrauben und Nutenstein für eine Profilverbindung nach der Erfindung mit zwei Verbindungsschrauben (Doppelverbinder)
- Figur 7: die Komponenten Gewindehülsen, Verbindungsschrauben sowie zweite Gewindehülsen für eine Profilverbindung nach der Erfindung (Stoßverbinder 180°)
- Figur 8: eine Ausführungsform der Gewindehülse nach der Erfindung in einer Teilschnittansicht
- Figur 9: die Gewindehülse nach Figur 8 in einer Ansicht von hinten
- Figur 10: einen vergrößerten Teilausschnitt der in Figur 8 dargestellten Gewindehülse.

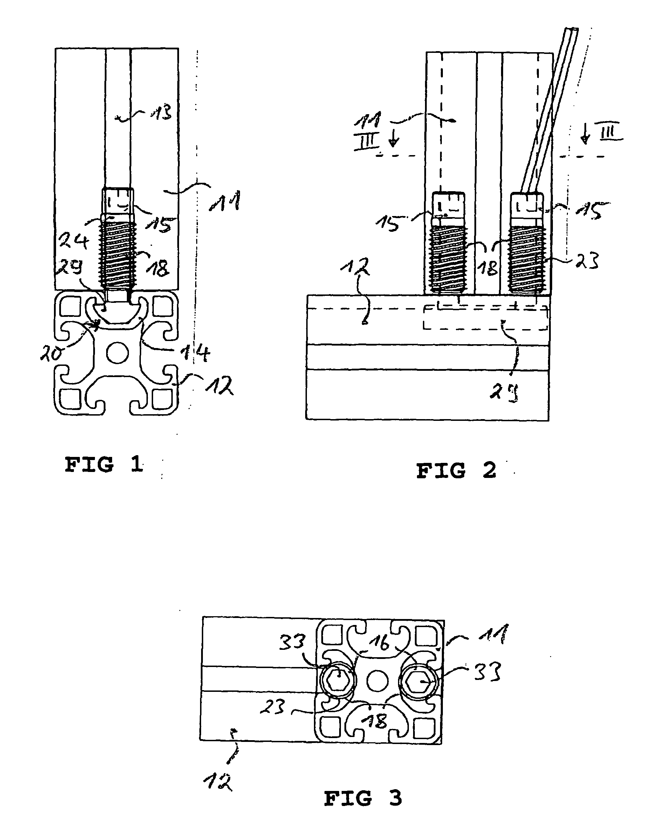

Figur 1 ist eine Profilverbindung umfassend einen ersten Profilstab 11 sowie einen zweiten Profilstab 12 in einer Schnittansicht durch den zweiten Profilstab 12 dargestellt. Die Profilstäbe 11, 12 weisen hier jeweils eine rechteckförmige, insbesondere quadratische Querschnittsform mit abgerundeten Kanten auf. Jeweils mittig sind längsverlaufend an allen vier Außenseiten in den Profilstäben 11, 12 jeweils eine hinterschnittene Profilnut 13, 14 eingeformt. In eine Profilnut 13 des ersten Profilstabes 11 ist eine Gewindehülse 18 gemäß der vorliegenden Erfindung eingedreht und in Verbindungsrichtung durch eine integral an der Gewindehülse 18 angeformte Rückdrehsperre 24 fixiert.

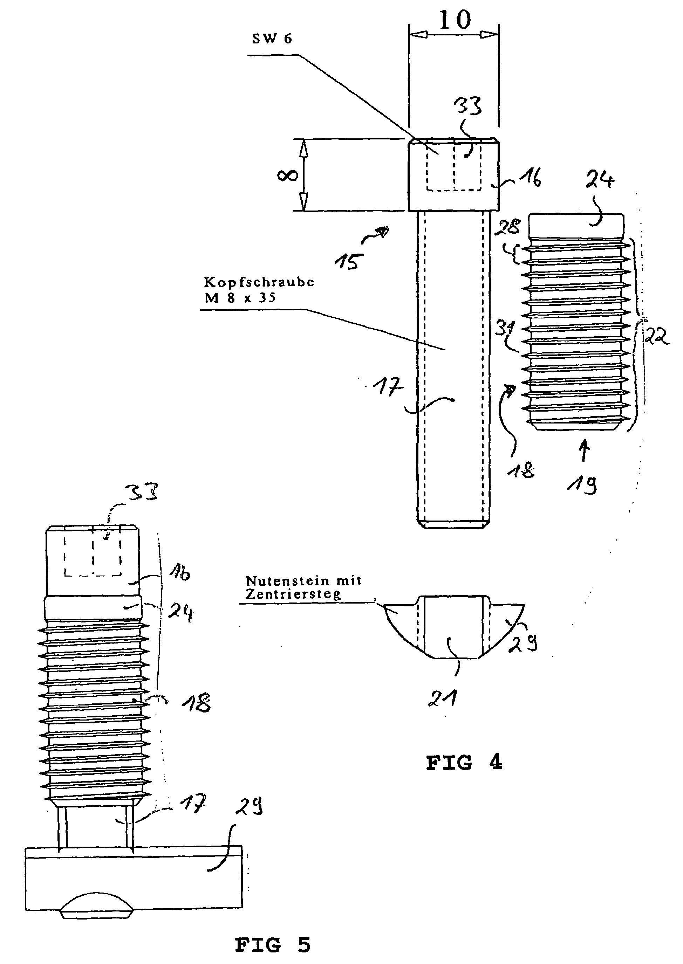

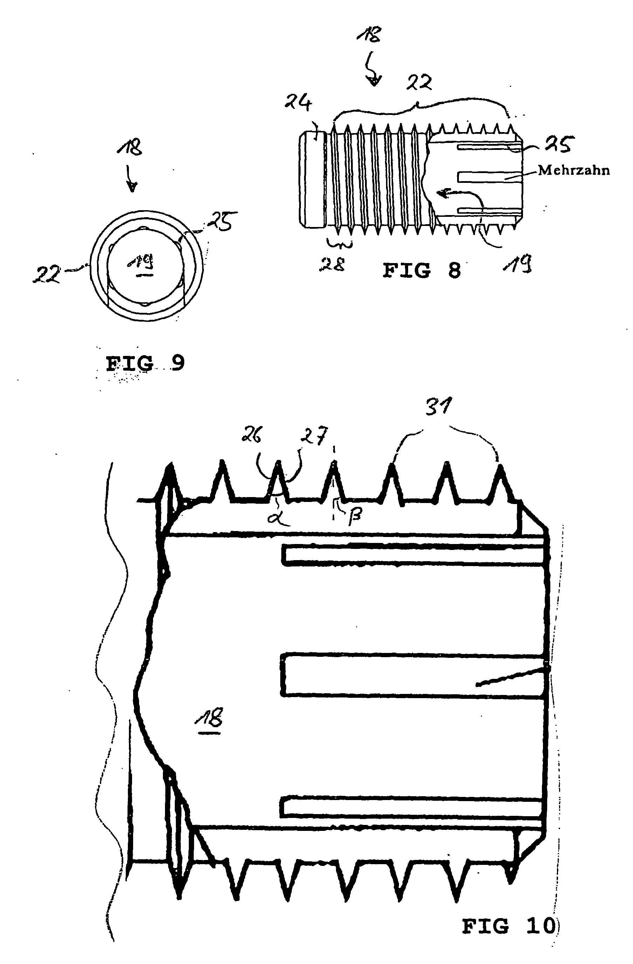

Die Gewindehülse 18 weist ein längsverlaufende Durchtrittsbohrung 19 (vgl. Figur 8, Figur 9) auf. Durch diese Durchtrittsbohrung 19 ist eine Verbindungsschraube 15, die einen Schraubenkopf 16 und einen Schraubenschaft 17 umfasst, derart geführt, dass der Schraubenschaft 17 am gegenüberliegenden Ende vorsteht und in ein in eine zugeordnete Profilnut 14 des zweiten Profilstabes 12 eingeschobenes Gegenlagerstück 20 eingreift. Das Gegenlagerstück 20 ist bei der vorliegenden Ausführungsform als Nutenstein 29 ausgebildet, der mit einer Innengewindebohrung 21 (vgl. Figur 4) ausgestattet ist, die auf das Gewinde des Schraubenschaftes 17 der Verbindungsschraube 15 ausgelegt ist. Die Verbindungsschraube 15 greift damit in die Innengewindebohrung 21 des Nutensteins 29 ein und bewirkt eine Fixierung des zweiten Profilstabes 12 am ersten Profilstabe 11.

In Figur 2 ist die Profilverbindung nach Figur 1 in einer hierzu orthogonalen Ansicht dargestellt, nämlich als Draufsicht auf die Seitenflächen von ersten und zweiten Profilstab 11, 12. Wie ersichtlich, handelt es sich um eine Profilverbindung nach Art eines Doppelverbinders, d.h. insgesamt zwei Verbindungsschrauben 15 sind am ersten Profilstab 11 in jeweils zueinander gegenüberliegenden Profilnuten 13 eingebracht und durch gleichartige Gewindehülsen 18 gehalten. Die Verbindungsschrauben 15 greifen mit ihren Schraubenschäften 17 in einen gemeinsamen Nutenstein 29 ein, der in entsprechender Beabstandung zwei auf das Gewinde der Schraubenschäfte ausgelegte Innengewindebohrungen 21 aufweist.

In Figur 3 ist die Profilverbindung nach den Figuren 1 und 2 in einer Schnittansicht entlang der Linie III - III in Figur 2 dargestellt. Zu erkennen ist der Eingriff der Gewindehülsen 18 in die jeweilige Wandfläche der Profilnuten 13 sowie die in den Gewindehülsen 18 gelagerten Verbindungsschrauben 15, insbesondere deren Schraubenkopf 16. Wie zu erkennen, sind an den Schraubenköpfen 16 jeweils eine Innensechskantausnehmung 33 zum Eingriff eines Innensechskants, insbesondere der Schlüsselweite 6 vorgesehen.

In Figur 4 sind die Einzelkomponenten, Verbindungsschraube 15, Gewindehülse 18 sowie Nutenstein 29 einer Profilverbindung nach der vorliegenden Erfindung in Explosionsansicht dargestellt. Die Verbindungsschraube 15 weist bei der vorliegenden Ausführungsform konkret einen Schraubenkopf 16 mit Durchmesser 10 mm und einer Höhe von 8 mm auf, in den die bereits erwähnte Innensechskantausnehmung 33 passend für Innensechskantschlüssel der Schlüsselweite 6 eingeformt ist. Der Schraubenschaft 17 weist hier eine Länge von 35 mm auf und ist ansonsten mit einem M8-Außengewinde versehen. Der Nutenstein 29 ist mit seiner Innengewindebohrung 21 auf das M8-Außengewinde des Schraubenschaftes 17 der Verbindungsschraube 15 abgestimmt.

Um die Verbindungsschraube 15 axial in der Profilnut 13 zu fixieren weist die bereits erwähnte Gewindehülse 18 einen Gewindedrückabschnitt 22 der einen auf ein bis zwei Gewindegänge begrenzten Einformabschnitt 28 umfasst auf, um in der Profilnut 13 ein Gewinde 23 durch Umformen einzuarbeiten. Die Gewindehülse 18 weist ferner eine Durchtrittsbohrung 19 zur Aufnahme des Schraubenschaftes 17 der Verbindungsschraube 15 sowie die bereits erwähnte angeformte Rückdrehsperre 24 auf, die die Gewindehülse 18 gegen ein Herausdrehen aus der Profilnut 13 blockiert.

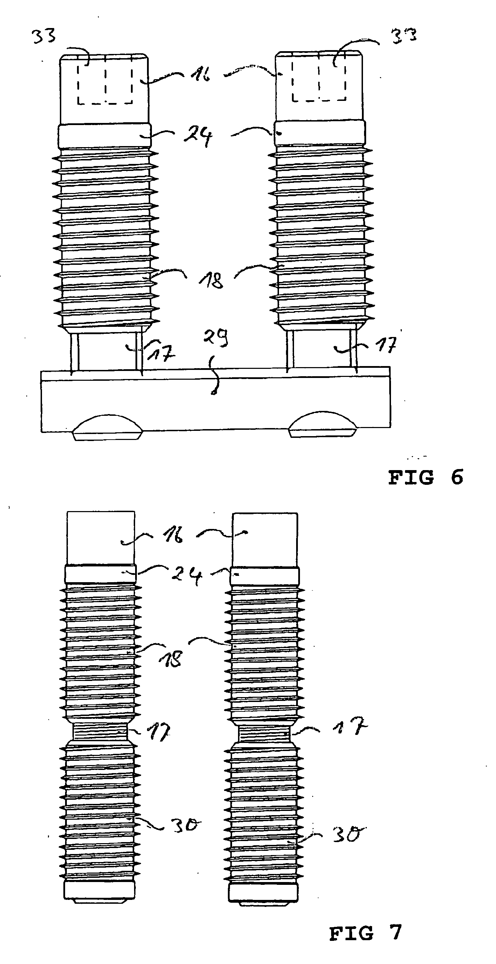

In Figur 5 ist das System bestehend aus Verbindungsschraube 15, Gewindehülse 18 sowie Nutenstein 29 am Beispiel einer als Einzelverbinder ausgestalteten Profilverbindung veranschaulicht. In Figur 6 ist das System bestehend aus zwei Verbindungsschrauben 15, zwei Gewindehülsen 18 sowie einem gemeinsamen Nutenstein 29 mit zwei Innengewindebohrungen 21 veranschaulicht. In Figur 7 ist eine Profilverbindung zur Ausbildung einer Stoßverbindung zwischen zwei Profilstäben 11, 12 umfassend zwei Verbindungsschrauben 15, zwei Gewindehülsen 18 mit Durchtrittsbohrungen 19 sowie zwei zweiten Gewindehülsen 30, die jeweils mit einem auf das M8-Gewinde des Schraubenschaftes 17 ausgelegten Innengewinde 32 versehen sind, dargestellt.

In Figur 8 ist die Gewindehülse aus den Figuren 1 bis 7 in einer Teilquerschnittansicht dargestellt. Hierbei wird ersichtlich, dass innerhalb der Durchtrittsbohrung 19 an ihrem in Einführrichtung hinteren Ende ein Werkzeugeingriff 25 ausgebildet ist, um die Gewindehülse 18 in die Profilnut 13 eines Profilstabes 11 einzudrehen. Auch die anhand der Figur 7 veranschaulichte zweite Gewindehülse 30, die mit einem Innengewinde 32 zum Eingriff des Schraubenschaftes 17 der Verbindungsschraube 15 versehen ist, weist einen entsprechenden Werkzeugeingriff 25 an ihrem in Eindrehrichtung hinteren Ende auf.

In Figur 9 ist die Gewindehülse 18 aus Figur 8 in einer Ansicht von hinten dargestellt. Ersichtlich ist wiederum der in der Durchtrittsbohrung 19 ausgebildete Werkzeugeingriff 25. In dem in Figur 10 dargestellten, vergrößerten Teilausschnitt aus Figur 8 wird nochmals die Anordnung der vorderen Gewindeflanken 26 und hinteren Gewindeflanken 27 der Gewindestege 31 des Gewindedrückabschnitts 22 genauer ersichtlich. Die Gewindestege 31 bzw. - zähne sind relativ spitz mit einem Flankenwinkel α = 30° ausgebildet. Der Flankenwinkel kann aber unter Umständen auch noch spitzer gewählt werden, so dass die Menge des in der Profilnut 13 zu verdrückenden Materials noch reduziert wird. Im vorliegenden Fall sind vordere Gewindeflanken 26 und hintere Gewindeflanken 27 symmetrisch ausgebildet, so dass der Winkel β der hinteren Gewindeflanke 27 gegen die Längsachse der Gewindehülse 15° beträgt. Es ist aber auch möglich, vordere Gewindeflanke 26 und hintere Gewindeflanke 27 mit unterschiedlichen Anstellwinkeln gegenüber der Längsachse der Gewindehülse 18 auszubilden.

### Bezugszeichenliste

- 11, 12: Profilstäbe
- 13, 14: Profilnut
- 15: Verbindungsschraube
- 16: Schraubenkopf
- 17: Schraubenschaft
- 18: Gewindehülse
- 19: Durchtrittsbohrung
- 20: Gegenlagerstück
- 21: Innengewindebohrung
- 22: Gewindedrückabschnitt
- 23: Gewinde (Profilnut)
- 24: Rückdrehsperre
- 25: Werkzeugeingriff
- 26: Gewindeflanke (vordere)
- 27: Gewindeflanke (hintere)
- 28: Einformabschnitt
- 29: Nutenstein
- 30: zweite Gewindehülse
- 31: Gewindestege
- 32: Innengewinde (zweite Gewindehülse)
- 33: Innensechskantausnehmung

## Patentansprüche

1. Profilverbindung umfassend zwei zu verbindende Profilstäbe (11, 12) aus Metall, insbesondere aus Aluminium, die jeweils mindestens eine längsverlaufende hinterschnittene Profilnut (13, 14) aufweisen,
wobei in die mindestens eine Profilnut (13) des ersten Profilstabes (11) eine Verbindungsschraube (15) mit einem Schraubenkopf (16) und einem Schraubenschaft (17) einführbar ist und
wobei in die Profilnut (13) weiterhin eine Gewindehülse (18) mit einer parallel zur Profilnut (13) verlaufenden Durchtrittsbohrung (19) einschraubbar ist,
wobei die Verbindungsschraube (15) mit ihrem Schraubenschaft (17) die Gewindehülse (18) durchtritt und durch die Gewindehülse (18) in Verbindungsrichtung gehalten wird,
wobei in die mindestens eine zugeordnete Profilnut (14) des zweiten Profilstabes (12) ein als für die Verbindungsschraube (15) als Gewindemutter wirkendes Gegenlagerstück (20) mit einer auf das Gewinde des Schraubenschaftes (17) angepassten Innengewindebohrung (21) eingebracht ist,
**dadurch gekennzeichnet,**
**dass** die Gewindehülse (18) mit einem Gewindedrückabschnitt (22) ausgebildet ist, der zum Spanabhub vermeidenden Formen eines Gewindes (23) mit durch Umformung geschaffenen und oberflächennah verfestigten Gewindeflanken in der Profilnut (13) des Profilstabes (11) ausgebildet ist.

2. Profilverbindung nach Anspruch 1,
**dadurch gekennzeichnet,**
**dass** die Gewindehülse (18) an ihrem in Einschraubrichtung vorderen Ende eine Rückdrehsperre (24) aufweist, die nach Ausbildung des durch Umformen in der Profilnut (13) erzeugten Gewindes (23) durch die nach innen geformten Gewindestege (31) des eingeformten Gewindes (23) die Gewindehülse (18) gegen Heraustreten sichert.

3. Profilverbindung nach Anspruch 1 oder 2,
**dadurch gekennzeichnet,**
**dass** die Gewindehülse (18) an ihrem in Einschraubrichtung hinteren Ende einen Werkzeugeingriff (25) aufweist.

4. Profilverbindung nach einem der Ansprüche 1 bis 3,
**dadurch gekennzeichnet,**
**dass** die Gewindehülse (18) Gewindeflanken (26, 27) mit einem Flankenwinkel α <30°, vorzugsweise < als 20°, insbesondere von etwa 10° bis 15° aufweist.

5. Profilverbindung nach einem der Ansprüche 1 bis 4,
**dadurch gekennzeichnet,**
**dass** die in Einschraubrichtung hintere Gewindeflanke (27) gegen die Längsachse der Gewindehülse (18) einen Winkel β von weniger als 18°, vorzugsweise weniger als 8°, insbesondere 0° bis 5° aufweist.

6. Profilverbindung nach einem der Ansprüche 1 bis 5,
**dadurch gekennzeichnet,**
**dass** der Gewindedrückabschnitt (22) einen ersten Einformabschnitt (28) aufweist, in dem die Gewindetiefe in weniger als zwei Umdrehungen, vorzugsweise in weniger als eine Umdrehung auf die zu formende Gewindetiefe ansteigt.

7. Profilverbindung nach einem der Ansprüche 1 bis 6,
**dadurch gekennzeichnet,**
**dass** der erste Einformabschnitt (28) bzw. der Gewindedrückabschnitt (22) derart ausgebildet sind, dass die Gewindehülse (18) selbsteinziehend ausgebildet ist.

8. Profilverbindung nach einem der Ansprüche 1 bis 7,
**dadurch gekennzeichnet,**
**dass** der Schraubenkopf (16) bei einem Kopfdurchmesser von 10 mm einen Innensechskant mit Schlüsselweiten > 5 mm (SW5), insbesondere mit Schlüsselweiten von 6 mm (SW6) aufweist.

9. Profilverbindung nach einem der Ansprüche 1 bis 8,
**dadurch gekennzeichnet,**
**dass** der Schraubenschaft (17) bei einem Kopfdurchmesser des Schraubenkopfes (16) von 10 mm einen Schaftdurchmesser > 6 mm, insbesondere von 8 mm aufweist.

10. Profilverbindung nach einem der Ansprüche 1 bis 9,
**dadurch gekennzeichnet,**
**dass** das Gegenlagerstück (20) als Nutenstein (29) oder als zweite Gewindehülse (30), die mit einem Innengewinde (32) versehen ist, ausgebildet ist.

11. Gewindehülse zur Verwendung in einer Profilverbindung nach einem der Ansprüche 1 bis 10.

12. Verfahren zum Verbinden zweier Profilstäbe (11, 12) aus Metall, insbesondere aus Aluminium, die jeweils mindestens eine längsverlaufende hinterschnittene Profilnut (13, 14) aufweisen, wobei in die mindestens eine Profilnut (13) des ersten Profilstabes (11) eine Verbindungsschraube (15) mit einem Schraubenkopf (16) oder einem Schraubenschaft (17) eingeführt wird, wobei zuvor, anschließend oder gleichzeitig in die Profilnut (13) weiterhin eine Gewindehülse (18) mit einer parallel zur Profilnut (13) verlaufenden Durchtrittsbohrung (19) eingeschraubt wird, wobei die Verbindungsschraube (15) mit ihrem Schraubenschaft (17) die Gewindehülse (18) durchtritt und durch die Gewindehülse (18) in Verbindungsrichtung gehalten wird, wobei in die mindestens eine zugeordnete Profilnut (14) des zweiten Profilstabes (12) ein als für die Verbindungsschraube (15) als Gewindemutter wirkendes Gegenlagerstück (20) mit einem auf das Gewinde des Schraubenschaftes (17) angepassten Innengewinde (21) eingebracht ist bzw. eingebracht wird,
**dadurch gekennzeichnet,**
**dass** die Gewindehülse (18) ein zu ihrem Halt erforderliches Gewinde (23) mit durch Umformung geschaffenen und oberflächennah verfestigten Gewindeflanken in der Profilnut durch einen umformenden, Spanabhub vermeidenden Gewindedrückprozess selbst einformt.

## Claims

1. Connection of profiles, comprising two section bars (11, 12) to be joined of metal, in particular of aluminium, each of which comprises at least one longitudinally extending recessed shaped groove (13, 14),
with a connecting screw (15) with a screw head (16) and a screw shaft (17) being insertable into the at least one shaped groove (13) of the first section bar (11), and further with a threaded sleeve (18) with a through-hole (19) extending in parallel to the shaped groove (13), which may be screwed into the shaped groove (13), with the connecting screw (15) with its screw shaft (17) passing through the threaded sleeve (18) and being held in the direction of connection by the threaded sleeve (18), with a counterbearing piece (20) with a female thread hole (21) which is matched to the thread of the screw shaft (17) being inserted into the at least one dedicated shaped groove (14) of the second section bar (12), which acts as a threaded nut for the connecting screw (15),
**characterised in that**
the threaded sleeve (18) is formed with a thread bulging portion (22) which is adapted for forming a thread (23) while avoiding chip removal by means of thread flanks which are created by deformation and are work hardened near the surface in the shaped groove (13) of the section bar (11).

2. Connection of profiles according to Claim 1,
**characterised in that**
the threaded sleeve (18) comprises a reverse-lock (24) at its front end in the screw-in direction, which secures the threaded sleeve (18) against coming out after formation of the thread (23) generated by deformation in the shaped groove (13) by means of the inwardly formed thread webs (31) of the incorporated thread (23).

3. Connection of profiles according to Claim 1 or 2,
**characterised in that**
the threaded sleeve (18) at its rear end in the screw-in direction comprises a tool engagement feature (25).

4. Connection of profiles according to one of Claims 1 to 3,
**characterised in that**
the threaded sleeve (18) comprises thread flanks (26, 27) with a flank angle α < 30°, preferably < 20°, in particular of approx. 10° to 15°.

5. Connection of profiles according to one of Claims 1 to 4,
**characterised in that**
the rear thread flank (27) in the screw-in direction comprises an angle β of less than 18°, preferably of less than 8°, in particular of 0° to 5°, with respect to the longitudinal axis of the threaded sleeve (18).

6. Connection of profiles according to one of Claims 1 to 5,
**characterised in that**
the thread bulging portion (22) comprises a first incorporating portion (28) where the thread depth increases to the thread depth to be incorporated within less than two turns, preferably within less than one turn.

7. Connection of profiles according to one of Claims 1 to 6,
**characterised in that**
the first forming portion (28) or the thread bulging section (22), respectively, is embodied in such a manner that the threaded sleeve (18) is self-inserting.

8. Connection of profiles according to one of Claims 1 to 7,
**characterised in that**
the screw head (16) with a head diameter of 10 mm comprises a hexagon socket with widths across flats > 5 mm (SW5), in particular with widths across flats of 6 mm (SW6).

9. Connection of profiles according to one of Claims 1 to 8,
**characterised in that**
the screw shaft (17) with a head diameter of the screw head (16) of 10 mm comprises a shaft diameter > 6 mm, in particular of 8 mm.

10. Connection of profiles according to one of Claims 1 to 9,
**characterised in that**
the counterbearing piece (20) is configured as a sliding block (29) or as a second threaded sleeve (30) which is provided with a female thread (32).

11. A threaded sleeve for use in a connection of profiles according to one of Claims 1 to 10.

12. A method for joining two profile bars (11, 12), of metal, in particular of aluminium, each of which comprises at least one longitudinally extending recessed shaped groove (13, 14), with a connecting screw (15) with a screw head (16) or a screw shaft (17) being inserted into the at least one shaped groove (13) of the first section bar (11), with a threaded sleeve (18) with a through-hole (19) extending in parallel to the shaped groove (13) being additionally screwed in previously, subsequently, or simultaneously, with the connecting screw (15) with its screw shaft (17) passing through the threaded sleeve (18) and being held in the direction of connection by the threaded sleeve (18), with a counterbearing piece (20) with a female thread (21) which is matched to the thread of the screw shaft (17) being inserted into the at least one dedicated shaped groove (14) of the second section bar (12), which acts as a threaded nut for the connecting screw (15),
**characterised in that**
the threaded sleeve (18) itself forms a thread (23) in the shaped groove, which is required for holding the former, by means of a thread bulging process avoiding chip removal with thread flanks which are created by deformation and work hardened near the surface.

## Revendications

1. Liaison pour profilés comprenant deux bâtons profilés à relier (11,12) en métal, en particulier en aluminium, qui présentent chacun au moins une rainure profilée contre-dépouillée (13,14) s'étendant longitudinalement,
où est insérable dans au moins une rainure profilée (13) du premier bâton profilé (11), une vis de liaison (15) avec une tête de vis (16) et une tige de vis (17) et
où peut être vissée dans la rainure profilée (13) en outre une douille filetée (18) avec un perçage traversant (19) s'étendant parallèlement à la rainure profilée (13),
où la vis de liaison (15) avec sa tige de vis (17) passe à travers la douille filetée (18) et est retenue par la douille filetée (18) dans la direction de liaison,
où est insérée dans au moins une rainure profilée associée (14) du deuxième bâton profilé (12) une pièce de contre-palier (20) agissant pour la vis de liaison (15) comme écrou fileté, avec un taraudage (21) adapté au filetage de la tige de vis (17),
**caractérisée en ce que**
la douille filetée (18) est réalisée avec une section de pressage de filetage (22) qui est réalisée pour le formage, en évitant l'enlèvement de copeaux, d'un filetage (23) avec des flancs de filetage formés par déformation et serrés à proximité de la surface dans la rainure profilée (13) du bâton profilé (11).

2. Liaison pour profilés selon la revendication 1,
**caractérisée en ce que**
la douille filetée (18), à son extrémité avant dans la direction de vissage, présente un blocage de rotation en arrière (24) qui, après la réalisation du filetage (23) produit par la déformation dans la rainure profilée (13), par les pas de filetage (31) formés vers l'intérieur du filetage formé (23), assure la douille filetée (18) à l'encontre d'une sortie.

3. Liaison pour profilés selon la revendication 1 et 2,
**caractérisée en ce que**
la douille filetée (18) présente à son extrémité arrière dans la direction de vissage une prise d'outil (25).

4. Liaison pour profilés selon l'une des revendications 1 à 3,
**caractérisée en ce que**
la douille filetée (18) présente des flancs de filetage (26,27) avec un angle de flanc α < 30°, de préférence < à 20°, en particulier d'environ 10 à 15°.

5. Liaison pour profilés selon l'une des revendications 1 à 4,
**caractérisée en ce que**
le flanc de filetage (27) arrière dans la direction de vissage présente relativement à l'axe longitudinal de la douille filetée (18) un angle β inférieur à 18°, de préférence inférieur à 8°, en particulier de 0° à 5°.

6. Liaison pour profilés selon l'une des revendications 1 à 5,
**caractérisée en ce que**
la section de pressage de filetage (22) présente une première section de formage (28) dans laquelle la profondeur de filetage augmente en moins de deux tours, de préférence en moins d'un tour, à la profondeur de filetage à former.

7. Liaison pour profilés selon l'une des revendications 1 à 6,
**caractérisée en ce que**
la première section de formage (28) respectivement la section de pressage de filetage (22) sont réalisées de telle sorte que la douille filetée (18) est à auto-engagement.

8. Liaison pour profilés selon l'une des revendications 1 à 7,
**caractérisée en ce que**
la tête de vis (16) pour un diamètre de tête de 10 mm présente un six pans creux avec des largeurs de clé > 5 mm (SW5), en particulier avec des largeurs de clé de 6 mm (SW6).

9. Liaison pour profilés selon l'une des revendications 1 à 8,
**caractérisée en ce que**
la tige de vis (17) pour un diamètre de la tête de vis (16) de 10 mm, présente un diamètre de tige > 6 mm, en particulier de 8 mm.

10. Liaison pour profilés selon l'une des revendications 1 à 9,
**caractérisée en ce que**
la pièce de contre-palier (20) est réalisée comme coulisseau (29) ou bien comme deuxième douille filetée (30) munie d'un taraudage (32).

11. Douille filetée pour utilisation dans une liaison pour profilés selon l'une des revendications 1 à 10.

12. Procédé pour relier deux bâtons profilés (11,12) en métal, en particulier en aluminium, qui présentent chacun au moins une rainure profilée contre-dépouillée (13,14) s'étendant longitudinalement, où est insérée dans au moins une rainure profilée (13) du premier bâton profilé (11) une vis de liaison (15) avec une tête de vis (16) ou une tige de vis (17), où avant, ensuite ou simultanément est vissée dans la rainure profilée (13) en outre une douille filetée (18) avec un perçage traversant (19) s'étendant parallèlement à la rainure profilée (13), où la vis de liaison (15) passe avec sa tige de vis (17) à travers la douille filetée (18) et est maintenue dans la direction de liaison par la douille filetée (18), où est insérée, respectivement sera insérée dans au moins une rainure profilée associée (14) du deuxième bâton profilé (12) une pièce de contre-palier (20) agissant pour la vis de liaison (15) comme écrou fileté avec un taraudage (21) adapté au filetage de la tige de vis (17), **caractérisée en ce que**
la douille filetée (18) forme elle-même un filetage (23) requis pour sa retenue avec des flancs de filetage créés par déformation et serrés à proximité de la surface dans la rainure profilée par un processus de pressage de filetage par déformation, évitant l'enlèvement des copeaux.
